# EUROPÄISCHE PATENTANMELDUNG

(11) **EP 2 556 910 A1**
(43) Veröffentlichungstag der Anmeldung: **13.02.2013**
(21) Anmeldenummer: 12177942.5
(22) Anmeldetag: 26.07.2012
(51) Int. Cl.: B23D 49/16

(54) **Elektrohandwerkzeuggerät mit einer in verschiedene Winkelpositionen einstellbaren Fußplatte**

(30) Priorität: 12.08.2011 DE 102011080901
(71) Anmelder: Metabowerke GmbH, 72622 Nürtingen (DE)
(72) Erfinder: Hörmann, Stephan, 72639 Neuffen (DE)
(74) Vertreter: Raunecker, Klaus Peter

(57) **Zusammenfassung**

Die Erfindung betrifft ein Elektrohandwerkzeuggerät mit einem Gehäuse (1) und einer gegenüber dem Gehäuse (1) in verschiedene Winkelpositionen einstellbaren Fußplatte (2), welche eine ebene Kontaktfläche zum Aufsetzen auf ein Werkstück aufweist, wobei die Fußplatte (2) mittels einer Halteplatte (4) an dem Gehäuse (1) gehalten ist, wobei die Halteplatte (4) mittels Federkraft in einem separaten Rastelement (3) in verschiedenen Winkelpositionen einrastbar ist.

## Beschreibung

Die Erfindung betrifft ein Elektrohandwerkzeuggerät nach dem Oberbegriff des Anspruchs 1, insbesondere eine Stichsäge.

Elektrohandwerkzeuggeräte wie beispielsweise Stichsägen zeigen üblicherweise ein Gehäuse sowie eine Fußplatte, mit welcher das Elektrohandwerkzeuggerät auf ein zu bearbeitendes Werkstück aufgesetzt werden kann. Beispielsweise sind Stichsägen mit einer Fußplatte ausgestattet, welche die Stichsäge gegen ein Werkstück bei der translatorischen Bewegung des Sägeblattes abstützt und das Führen der Stichsäge gegenüber dem Werkstück erleichtert bzw. erst ermöglicht.

Im Regelfall weist die Fußplatte eine ebene Kontaktfläche auf, wobei sich das Sägeblatt in vertikaler Richtung gegenüber der genannten ebenen Kontaktfläche auf- und abbewegt. Für manche Anwendungen, wie beispielsweise für Gehrungsschnitte, ist es jedoch erforderlich, bei der Bewegung des Sägeblatts von der Vertikalen gegenüber der genannten Kontaktfläche abzuweichen, insbesondere einen Winkel von 45° gegen die Kontaktfläche einzustellen. Hierzu sind im Stand der Technik eine Reihe von Lösungen vorgestellt worden. Insbesondere kann nach dem Stand der Technik die Fußplatte von Stichsägen gegenüber dem Gehäuse und damit gegenüber der Bewegungsrichtung des Sägeblatts verkippt werden, wobei bestimmte voreingestellte Winkel der Normalen der Fußplatte gegenüber der Bewegungsrichtung des Sägeblattes in verschiedenen Rastpositionen eingestellt werden können.

So wird zum Beispiel in der europäischen Patentschrift EP 1 514 626 B1 eine Stichsäge vorgeschlagen, bei welcher die Fußplatte an ihrer Unterseite, also der dem Werkstück zugewandten Seite, eine Reihe von Ausnehmungen aufweist, in welche ein Rastvorsprung bzw. mehrere Rastvorsprünge eines Befestigungsabschnitts eingreifen können. Dabei kann es sich bei den elastisch beweglichen bzw. elastisch verlagerbaren Rastvorsprüngen um federvorgespannte Kugellager handeln. Die in der genannten Schrift beschriebene Lösung zeigt jedoch insbesondere den Nachteil, dass die genannten Ausnehmungen in der Fußplatte selbst angeordnet sind, so dass die beschriebene Stichsäge im Hinblick auf die einrastbaren Winkelpositionen vergleichsweise unflexibel ist.

Die vorliegende Erfindung stellt sich somit die Aufgabe, ein Elektrohandwerkzeuggerät, insbesondere eine Stichsäge, anzugeben, welche konstruktiv einfach die Möglichkeit bietet, mit erhöhter Flexibilität verschiedene Winkelpositionen einer Fußplatte gegenüber einem Gerätegehäuse und damit gegenüber der Bewegungsrichtung eines Arbeitswerkzeugs, wie beispielsweise eines Sägeblatts, einzustellen.

Erfindungsgemäß wird diese Aufgabe mit einem Elektrohandwerkzeuggerät mit den Merkmalen des Anspruchs 1 gelöst. Die Unteransprüche betreffen vorteilhafte Ausführungsformen und Varianten der Erfindung.

Das erfindungsgemäße Elektrohandwerkzeuggerät zeigt ein Gehäuse und eine gegenüber dem Gehäuse in verschiedene Winkelpositionen einstellbare Fußplatte, welche eine ebene Kontaktfläche zum Aufsetzen auf ein Werkstück aufweist, wobei die Fußplatte mittels einer Halteplatte an dem Gehäuse gehalten ist und wobei die Halteplatte mittels Federkraft in einem separaten Rastelement in verschiedenen Winkelpositionen einrastbar ist. Dadurch, dass im Unterschied zum Stand der Technik nicht in der Fußplatte selbst Ausnehmungen zum Einrasten von Vorsprüngen eines Befestigungsabschnitts ausgebildet sind, sondern vielmehr ein separates Rastelement mit entsprechenden Ausnehmungen vorhanden ist, kann in vorteilhafter Weise eine erhöhte Flexibilität der erfindungsgemäßen Anordnung erreicht werden. So erlaubt es die separate Ausbildung des Rastelements, dass dieses bei Bedarf je nach Arbeitssituation auch gewechselt bzw. ersetzt werden kann.

Unterschiedliche Rastelemente können dabei unterschiedliche Sätze von Ausnehmungen oder auch Vorsprünge zum Verrasten mit einem korrespondierenden Abschnitt einer Halteplatte aufweisen. Ferner kann auch eine unterschiedliche Geometrie bzw. Materialwahl des Rastelements erfindungsgemäß dazu genutzt werden, unterschiedliche gewünschte Federkräfte für die Verrastung einzustellen.

In einer vorteilhaften Variante der Erfindung wirkt die Federkraft, mit welcher die Verrastung erreicht wird, überwiegend in einer Richtung parallel zur Kontaktfläche, beispielsweise in bzw. parallel zur Vorschub-/Schnittrichtung einer Stichsäge. Damit fällt die Kraftrichtung der Verrastung, also diejenige Richtung, in welche die die Verrastung sicherstellende Kraft primär wirkt, und die Kraftrichtung der Befestigung der Fußplatte an dem Gehäuse auseinander, wodurch sich verbesserte Gestaltungsmöglichkeiten einerseits für die Wahl der Kraft der Verrastung als auch für die Art der Verbindung der Fußplatte mit dem Gehäuse ergeben. So kann beispielsweise die Halteplatte mittels einer Schraube zusammen mit der Fußplatte gegen das Gehäuse verschraubt werden.

Bei dem Rastelement kann es sich insbesondere um einen Rastbügel handeln; der Rastbügel kann dabei mindestens zwei im Wesentlichen gleich lange stegförmige Elemente aufweisen, welche an ihren Stirnseiten mittels mindestens eines ringsegmentförmigen Elements verbunden sind.

Dabei kann das mindestens eine ringsegmentförmige Element im Wesentlichen halbkreisbogenförmig ausgebildet sein; die Halteplatte kann mindestens eine Rastnase aufweisen, welche zur Einstellung einer gewünschten Winkelausrichtung in eine Vertiefung in dem mindestens einen ringsegmentförmigen Element einrasten kann. Es ist daneben auch denkbar, dass die Halteplatte eine Vertiefung aufweist, in welche Rastnasen auf der Innenseite des mindestens eines ringsegmentförmigen Elementes einrasten kann.

Insbesondere können auch zwei ringsegmentförmige Elemente vorhanden sein, zwischen denen die Halteplatte angeordnet ist.

Sowohl das Rastelement als auch die Halteplatte können elastische Eigenschaften zum Aufbringen der zur Verrastung erforderlichen Federkraft aufweisen. Hierzu kann beispielsweise das Rastelement aus Polyamid oder Polyoxymethylen, beispielsweise als Spritzgussteil, ausgebildet sein. Besonders vorteilhaft ist hier die Verwendung von Polyoxymethylen, welches einerseits gute Eigenschaften zur Verarbeitung und andererseits auch vorteilhafte Gleiteigenschaften aufweist, so dass ein sicheres, reproduzierbares und verschleißarmes Rasten der Rastnasen der Halteplatte in den entsprechenden Ausnehmungen sichergestellt ist.

Das Rastelement kann dadurch fest aber lösbar mit der Fußplatte verbunden sein, dass es mindestens einen Rasthaken aufweist, mit welchem es in wenigstens einer korrespondierenden Ausnehmung in der Fußplatte verrastet werden kann. Selbstverständlich sind auch andere lösbare Verbindungen zwischen dem Rastelement und der Fußplatte denkbar.

Die Fußplatte kann entlang ihrer Längsachse (also entlang der Vorschubrichtung des Werkzeugs, wie beispielsweise der Stichsäge) eine erste zylindrische Ausnehmung aufweisen, in welcher das Rastelement angeordnet ist. Dabei kann das Rastelement ebenfalls eine zylindrische Ausnehmung aufweisen, welche koaxial zu der ersten Ausnehmung verläuft. Auf diese Weise wird auf der dem Werkstück zugewandten Seite der Fußplatte ein im Wesentlichen halbzylindrischer Kanal ausgebildet, durch den beispielsweise ein Ansaugstutzen einer Absaugeinrichtung geführt werden kann. Der Ansaugstutzen durchtritt dabei die Ausnehmung in der Fußplatte und nachfolgend das Rastelement in Richtung des Sägeblatts.

Weiterhin kann die Fußplatte eine T- oder Kreuznut aufweisen, durch welche ein Fortsatz der Halteplatte geführt werden kann. Dabei erlaubt der zur Vorschubrichtung quer verlaufende Teil der Nut ein seitliches Verkippen des Gehäuses gegenüber der Fußplatte und damit beispielsweise eine Änderung des Winkels, in welchem die Auf- und Abbewegung eines Stichsägeblattes erfolgt, wie es beispielsweise für einen Gehrungsschnitt erforderlich sein könnte.

Die in Vorschubrichtung verlaufenden Teile der Nut dienen einerseits dem sicheren Verrasten der Fußplatte gegenüber dem Gehäuse in einer 90°-Position und schaffen andererseits die Möglichkeit, das Sägeblatt der Stichsäge möglichst weit an den vorderen Rand der Fußplatte zu bringen, um beispielsweise ein randnahes Sägen zu ermöglichen.

In einer weiteren Variante der Erfindung kann die Halteplatte einen von der Gehäuseseite des Elektrohandwerkzeuggeräts her sichtbaren Winkelzeiger zum Anzeigen der momentan eingestellten Winkeleinstellung aufweisen. Alternativ kann auch lediglich in der Fußplatte eine Ausnehmung mit einer entsprechenden Markierung vorgesehen sein, welche den Blick auf eine auf der Oberseite der Halteplatte, also der dem Gehäuse zugewandten Seite der Halteplatte, angeordnete Winkelskala freigibt.

In einer vorteilhaften Ausführunform kann in Winkelpositionen von 0°, 22,5°, 45° der Normalen der Fußplatte gegenüber der Bewegungsrichtung bspw. eines Sägeblattes eingerastet werden. Nachfolgend wird ein exemplarisches Ausführungsbeispiel der Erfindung anhand der Zeichnung näher erläutert.

Es zeigen:
- Figur 1: eine Explosionsdarstellung der für die Erfindung wesentlichsten Teile eines Elektrohandwerkzeuggeräts;
- Figur 2: eine perspektivische Ansicht einer Fußplatte mit Rastbügel und Halteplatte, und
- Figur 3: eine alternative Ausführungsform eines Rastbügels

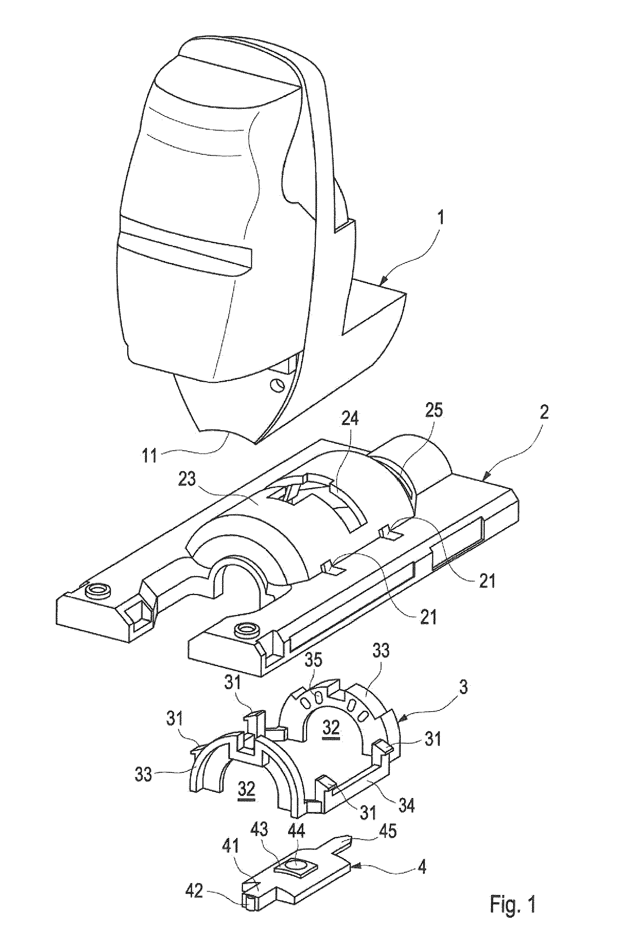

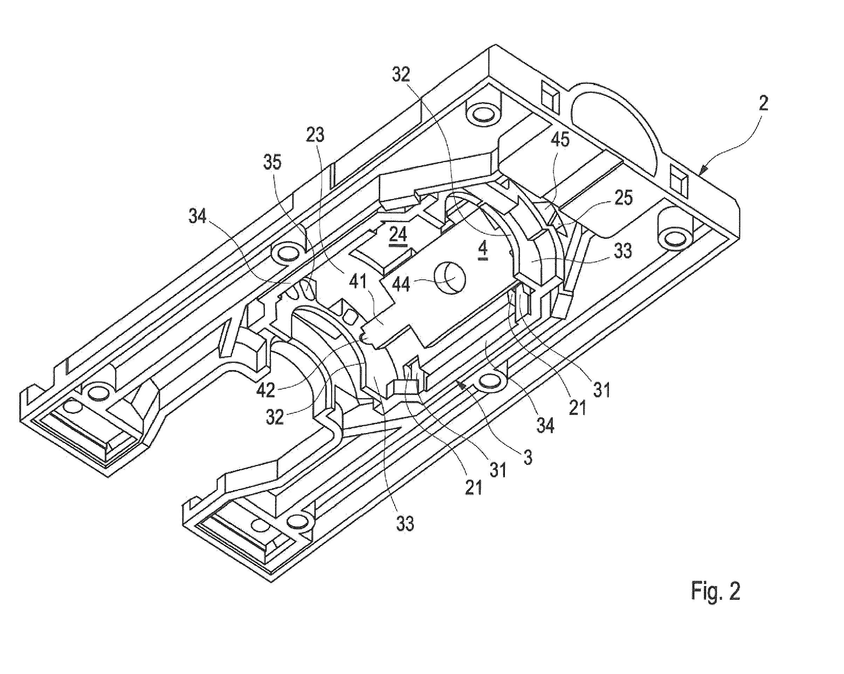

Die Figuren 1 und 2 zeigen eine exemplarische Ausführungsform der Erfindung, wobei es sich bei der Figur 1 um eine Explosionsdarstellung handelt, wohingegen Figur 2 als perspektivische Ansicht einer Fußplatte 2 mit Rastbügel 3 und Halteplatte 4 ausgeführt ist.

In Figur 1 ist lediglich grob schematisch ein Gehäuse 1 eines erfindungsgemäßen Elektrohandwerkzeuggerätes dargestellt, wobei es sich im vorliegenden Beispiel um eine Stichsäge handelt. Das Gehäuse 1 enthält insbesondere einen Motor und die zur Bewegung eines nicht dargestellten Sägeblattes erforderliche Mechanik. Die Fußplatte 2, welche unterhalb des Gehäuses 1 dargestellt ist, dient zum Aufsetzen des Elektrohandwerkzeuggerätes auf ein in der Figur nicht dargestelltes Werkstück und bietet insbesondere ein Widerlager für die bei der Bewegung des Sägeblattes entstehenden Kräfte in Bewegungsrichtung des Sägeblattes. Die Fußplatte 2 zeigt auf ihrer dem Gehäuse 1 zugewandten Seite einen halbzylindrischen Aufsatz 23, der in montiertem Zustand gegen eine Gehäuseunterseite 11 des Gehäuses 1 beispielsweise verschraubt sein kann. Dabei korrespondiert die Gehäuseunterseite 11 hinsichtlich ihrer Form dem halbzylindrischen Aufsatz 23 der Fußplatte 2, so dass ein seitliches Verkippen des Gehäuses 1 gegenüber der Fußplatte 2 ermöglicht wird. Dieses Verkippen führt im Ergebnis dazu, dass das Sägeblatt gegenüber der Fußplatte in eine von 90° abweichende Winkelorientierung gebracht werden kann.

Ebenfalls gut erkennbar in Figur 1 ist eine Kreuznut 24 im Aufsatz 23 der Fußplatte 2, durch welche die Fußplatte 2 mit dem Gehäuse 1 verschraubt werden kann. Diese Verschraubung der Fußplatte 2 mit dem Gehäuse 1 wird dabei dadurch bewerkstelligt, dass eine Halteplatte 4 vorhanden ist, deren obere, also dem Gehäuse 1 zugewandte Kontur der Unterseite der Fußplatte 2 im Bereich des Aufsatzes 23 korrespondiert. Die Halteplatte 4 weist eine Bohrung 44 für eine nicht dargestellte Fixierschraube auf, welche von unten durch die Bohrung 44 und die Kreuznut 24 geführt und mit der Unterseite des Gehäuses 1 verschraubt werden kann. Dadurch wird die Halteplatte 4 von unten gegen die Fußplatte 2 gedrückt, wodurch im Ergebnis die Fußplatte 2 an der Unterseite des Gehäuses 1 festgelegt wird.

Ebenfalls dargestellt in Figur 1 ist ein Rastbügel 3 als Rastelement, in welchem die Halteplatte 4 derart geführt werden kann, dass die Halteplatte 4 in verschiedenen Winkelpositionen der Fußplatte 2 gegenüber dem Gehäuse 1 in dem Rastbügel 3 einrasten kann. Dazu zeigt der Rastbügel 3 ringsegmentförmige Elemente 33, die im vorliegenden Beispiel im Wesentlichen halbkreisbogenförmig ausgebildet sind und so jeweils eine Ausnehmung 32 bilden. Die ringsegmentförmigen Elemente 33 sind mittels stegförmiger Elemente 34 wie in der Figur gezeigt mit einander verbunden.

An ihren Innenseiten weisen die ringsegmentförmigen Elemente 33 Vertiefungen 35 auf, in welche eine an einem Vorsprung 41 der Halteplatte 4 ausgebildete Rastnasen 42 einrasten kann. In Figur 1 sind diese Vertiefungen 35 lediglich für den im Hintergrund befindlichen Teil des Rastbügels 3 sichtbar; sie sind jedoch auch an der Innenseite des im Vordergrund dargestellten Elementes 33 angeordnet, wie auch aus Figur 2 deutlich wird. Ebenfalls aufgrund der perspektivischen Darstellung nicht sichtbar ist eine weitere Rastnase auf der dem Vorsprung 41 gegenüberliegenden Seite der Rastplatte 4. Durch die aus der Figur erkennbare Gestaltung des Rastbügels 3, insbesondere durch die Ausnehmungen 32, wird erreicht, dass sich auf der Unterseite der Fußplatte 2 ein im Wesentlichen halbzylindrischer Kanal ausbildet, durch welchen beispielsweise ein in der Figur nicht dargestellter Absaugschlauch zum Absaugen von Staub bzw. Spänen aus dem Arbeitsbereich des Elektrohandwerkzeuggerätes geführt werden kann.

Der Rastbügel 3 kann dabei mittels Rasthaken 31 in Ausnehmungen 21 in der Fußplatte 2 von unten her eingerastet werden; er korrespondiert in seiner Form im Wesentlichen der dem Gehäuse 1 abgewandten Seite des halbzylindrischen Aufsatzes 23 der Fußplatte 2.

Ebenfalls erkennbar in Figur 1 ist ein im Wesentlichen quaderförmiger Fortsatz 43 auf der der Fußplatte 2 zugewandten Seite der Halteplatte 4, der in montiertem Zustand in Eingriff mit der Kreuznut 24 in der Fußplatte steht 2 und die Relativbewegung der Fußplatte 2 zu dem Gehäuse 1 führt. Daneben weist die Halteplatte den Winkelzeiger 45 auf, der in montiertem Zustand die Fußplatte 2 durch einen in dieser angeordneten Schlitz 25 durchtritt und einer in der Figur nicht dargestellten Winkelskala zugeordnet ist.

Wie bereits erwähnt ist in Figur 2 die Fußplatte 2 mit montiertem Rastbügel 3 und ebenfalls montierter Halteplatte 4 von unten her, also von der Seite eines Werkstückes aus gesehen, dargestellt. Dabei sind die Rasthaken 31 in den Ausnehmungen 21 der Fußplatte 2 verrastet. Die Halteplatte 4 ist zwischen den beiden Stirnseiten des Rastbügels 3, also zwischen den beiden ringsegmentförmigen Elementen 33, eingespannt. Dabei befindet sich in der gezeigten Konfiguration die Rastnase 42 in Eingriff mit der Vertiefung 35, so dass die Fußplatte 2 gegenüber dem in der Figur 2 nicht dargestellten Gehäuse 1 in einer bestimmten Winkelposition fixiert ist. Ebenfalls gut erkennbar in Figur 2 ist, dass der Winkelzeiger 45 etwas über den Rastbügel 3 übersteht, so dass er von der Oberseite des Elektrohandwerkzeuggerätes her gesehen werden kann und damit auf der in den Figuren nicht dargestellten Winkelskala die aktuelle Winkelposition der Fußplatte 2 gegenüber dem Gehäuse 1 angibt.

Aus der Gestaltung der Kreuznut 24 wird erkennbar, dass die 90° Einstellung der Fußplatte 2 gegenüber dem Gehäuse 1 dadurch bewerkstelligt werden kann, dass in der genannten Stellung die Fußplatte etwas nach vorne geschoben wird. Dadurch wird der Fortsatz 43 der Halteplatte 4 in den hinteren Teil der Kreuznut 24 eingeschoben und bildet von drei Seiten her eine formschlüssige Verbindung mit dieser. Da sowohl die Halteplatte 4 als auch die Fußplatte 2 aus einem metallischen Werkstoff gebildet sein können, wird diese - im üblichen Betrieb wichtigste - Winkelposition mit besonderer Genauigkeit eingestellt. Die übrigen Winkelpositionen werden wie bereits gezeigt dadurch eingestellt, dass die Rastnasen 42 jeweils mit einer der Vertiefungen 35 in Eingriff gebracht werden. Die Fixierung in diesen Winkelpositionen wird insbesondere dadurch erreicht, dass seitens des Rastbügels 3 eine Federkraft in Richtung der Rastplatte 4 aufgebracht wird. Hierzu kann der Rastbügel 3 insbesondere aus einem Kunststoff hergestellt sein.

Ein Zurückziehen der Fußplatte 2 gegenüber dem Gehäuse 1 in der 90° Stellung führt dazu, dass der Fortsatz 43 in den vorderen Teil der Kreuznut 24 eingebracht wird. Hierdurch verschiebt sich das Gehäuse 1 mit dem darin angeordneten Sägeblatt gegenüber der Fußplatte 2 nach vorne, so dass auch ein randnahes Sägen in Bereichen des Werkstücks ermöglicht wird, die bei einer weiter nach vorne ausragenden Fußplatte 2 nicht erreichbar wären. Eine derartige Position der Fußplatte 2 kann beispielsweise bei einem auf eine Wand zulaufenden Schnitt beispielsweise in einer montierten Arbeitsplatte erforderlich sein.

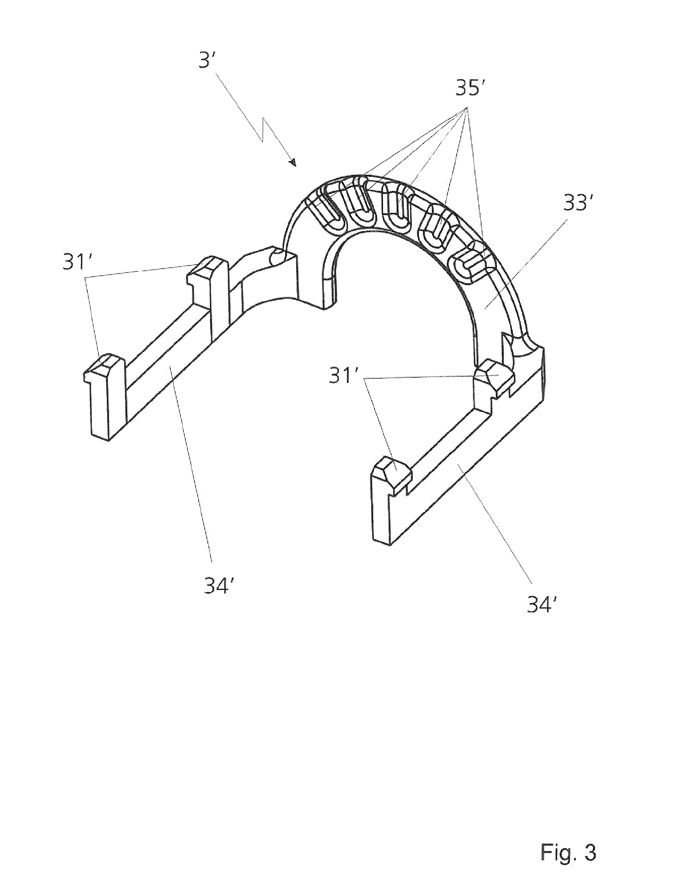

Figur 3 zeigt eine alternative Ausführungsform eines Rastbügels 3`. Dabei sind in Figur 3 Komponenten, die den aus den vorigen Figuren bekannten Komponenten entsprechen, mit gestrichenen Bezugszeichen bezeichnet. Im Unterschied zu der in den vorstehenden Figuren gezeigten Ausführungsform ist an dem in der Figur 3 dargestellten Rastbügel 3' sind die stegförmigen Elemente 34' lediglich an einer ihrer Stirnseiten mittels des ringsegmentförmigen Elementes 33' verbunden. Im gezeigten Beispiel wird der Rastbügel 3' derart in eine Grundplatte eingesetzt, dass die geschlossene Seite in Arbeits-/Vorschubrichtung des Elektrohandwerkzeuggerätes weist. Auch ein umgekehrt ausgerichteter Einbau ist hier grundsätzlich denkbar. Gut erkennbar in Figur 3 sind die einstellbaren Winkelpositionen der Grundplatte von 0°, 22,5° sowie 45°.

## Patentansprüche

1. Elektrohandwerkzeuggerät mit einem Gehäuse (1) und einer gegenüber dem Gehäuse (1) in verschiedene Winkelpositionen einstellbaren Fußplatte (2), welche eine ebene Kontaktfläche zum Aufsetzen auf ein Werkstück aufweist, wobei die Fußplatte (2) mittels einer Halteplatte (4) an dem Gehäuse (1) gehalten ist, **dadurch gekennzeichnet, dass** die Halteplatte (4) mittels Federkraft in einem separaten Rastelement (3) in verschiedenen Winkelpositionen einrastbar ist.

2. Elektrohandwerkzeuggerät nach Anspruch 1,
**dadurch gekennzeichnet, dass** die Federkraft überwiegend in einer Richtung parallel zur Kontaktfläche wirkt.

3. Elektrohandwerkzeuggerät nach Anspruch 1 oder 2,
**dadurch gekennzeichnet, dass** es sich bei dem Rastelement (3) um einen Rastbügel (3) handelt.

4. Elektrohandwerkzeuggerät nach einem der Ansprüche 1 bis 3,
**dadurch gekennzeichnet, dass** das Rastelement (3) fest mit der Fußplatte (2) verbunden ist.

5. Elektrohandwerkzeuggerät nach einem der Ansprüche 1 bis 4,
**dadurch gekennzeichnet, dass** das Rastelement (3) oder die Halteplatte (4) elastische Eigenschaften zum Aufbringen der Federkraft aufweisen.

6. Elektrohandwerkzeuggerät nach einem der vorangehenden Ansprüche,
**dadurch gekennzeichnet, dass** das Rastelement (3) mindestens einen Rasthaken (31) aufweist, mit welchem es in mindestens einer korrespondierenden Ausnehmung (21) in der Fußplatte (2) verrastet werden kann.

7. Elektrohandwerkzeuggerät nach einem der Ansprüche 3 bis 6,
**dadurch gekennzeichnet, dass** der Rastbügel (3) mindestens zwei im Wesentlichen gleich lange stegförmige Elemente (34) aufweist, welche an ihren Stirnseiten mittels mindestens eines ringsegmentförmigen Elementes (33, 33') verbunden sind.

8. Elektrohandwerkzeuggerät nach Anspruch 7,
**dadurch gekennzeichnet, dass** das mindestens eine ringsegmentförmigen Element (33, 33') im Wesentlichen halbkreisbogenförmig ausgebildet ist.

9. Elektrohandwerkzeuggerät nach Anspruch 7 oder 8,
**dadurch gekennzeichnet, dass** die Halteplatte (4) mindestens eine Rastnase (42) aufweist, welche zur Einstellung einer gewünschten Winkelausrichtung in eine Vertiefung (35, 35') in dem mindestens einen ringsegmentförmigen Element (33, 33') einrasten kann.

10. Elektrohandwerkzeuggerät nach einem der Ansprüche 7-9,
**dadurch gekennzeichnet, dass** die Halteplatte (4) zwischen zwei ringsegmentförmigen Elementen (33) angeordnet ist.

11. Elektrohandwerkzeuggerät nach einem der vorangehenden Ansprüche,
**dadurch gekennzeichnet, dass** die Fußplatte (2) entlang ihrer Längsachse eine erste zylindrische Ausnehmung aufweist, in welcher das Rastelement (3) angeordnet ist, wobei das Rastelement (3) ebenfalls eine zylindrische Ausnehmung (32) aufweist, welche koaxial zu der ersten Ausnehmung verläuft.

12. Elektrohandwerkzeuggerät nach einem der vorangehenden Ansprüche,
**dadurch gekennzeichnet, dass** die Fußplatte (2) eine T- oder Kreuznut (24) aufweist, durch welche ein Fortsatz (43) der Halteplatte (4) geführt werden kann.

13. Elektrohandwerkzeuggerät nach einem der vorangehenden Ansprüche,
**dadurch gekennzeichnet, dass** die Halteplatte (4) einen von der Gehäuseseite des Elektrohandwerkzeuggerätes her sichtbaren Winkelzeiger (45) zum Anzeigen der momentan eingestellten Winkeleinstellung aufweist.

14. Elektrohandwerkzeuggerät nach einem der vorangehenden Ansprüche,
**dadurch gekennzeichnet, dass** es sich bei dem Elektrohandwerkzeuggerät um eine Stichsäge handelt.

15. Elektrohandwerkzeuggerät nach einem der vorangehenden Ansprüche,
**dadurch gekennzeichnet, dass** in Winkelpositionen von 0°, 22,5°, 45° eingerastet werden kann.
